# EUROPEAN PATENT APPLICATION

(11) **EP 1 391 662 A1**
(43) Date of publication of application: **25.02.2004**
(21) Application number: 03017821.4
(22) Date of filing: 04.08.2003
(51) Int. Cl.: F24F 11/04, F24F 11/00

(54) **Gas flow control system**

(30) Priority: 22.08.2002 GB 0219552; 26.02.2003 GB 0304310
(71) Applicant: Gatley, Richard, Suckley, Worcestershire, WR6 5DR (GB)
(72) Inventor: Gatley, Richard, Suckley, Worcestershire, WR6 5DR (GB)
(74) Representative: Lucking, David John

(57) **Abstract**

A gas flow control system (10) for controlling the flow of a gas through an opening of an environment (14), comprising a flow control member (22) adapted to be mounted in the opening and moveable to adopt any of a plurality of positions, a gas pressure indicator (30, 32) which produces at least one indication of the pressure of the gas in the environment (14), and a controller (28) which receives and acts upon the indication of the gas pressure to control the position adopted by the flow control member (22) to control the flow of the gas through the opening.

## Description

### Description of Invention

This invention is concerned with improvements relating to gas flow control systems.

Gas flow control systems are used in a number of applications, for example environments where it is desired to control the flow of gas into and/or out of the environment, for example to maintain the gas pressure in the environment at a substantially constant level. In a surgically clean environment, it is the practice to maintain an environmental air pressure at a predetermined level above atmospheric pressure, to prevent possibly contaminated air from flowing into the environment. A gas flow control system is conventionally used to stabilise and maintain the environmental air pressure, by controlling the flow of air into and/or out of an opening in the environment. The system comprises a control member mounted in the opening, for movement between open and closed positions. The control member is operative to move from its closed position in the event that air pressure in the surgically clean environment rises above the predetermined level, and to return to its closed position in the event that pressure falls below the predetermined level.

Such conventional gas flow control systems are purely mechanical devices, and have a number of shortcomings. Conventionally, the control member is only movable from a closed position to an open position and vice versa, limiting the gas flow control which can be achieved. The control member rotates on bearings and the inertia in the control member must be overcome in order for it to move. Thus the gas flow control system may be difficult to control at low gas flows, and this instability can lead to "hunting". Thus, traditionally, it has been necessary to closely match the size and rated capacity of a gas flow control system to the likely level of gas flow. The mechanical balancing of such systems only works effectively up to an angle of rotation of the control member of about 48°. The effective area of the opening is thus limited to around 36% of the total area. Thus a relatively large gas flow control system must usually be provided which results in an inefficient use of wall space around the environment

According to this invention there is provided a gas flow control system for controlling the flow of a gas through an opening of an environment, comprising a flow control member adapted to be mounted in the opening and moveable to adopt any of a plurality of positions, a gas pressure indicator which produces at least one indication of the pressure of the gas in the environment, and a controller which receives and acts upon the indication of the gas pressure to control the position adopted by the flow control member to control the flow of the gas through the opening.

The gas flow control system may control the flow of the gas to provide a desired rate of gas flow through the opening. The gas flow control system may provide a substantially constant rate of gas flow through the opening. The gas flow control system may provide a variable rate of gas flow through the opening. The gas flow control system may control the flow of the gas to maintain a substantially constant gas pressure in the environment. This may be achieved by providing a variable rate of gas flow through, for example, one or more outlet openings and/or one or more inlet openings of the environment.

In one embodiment, the gas flow control system may control the flow of the gas to maintain a gas pressure in the environment at a substantially constant level above atmospheric pressure. This may be achieved by mounting the flow control member in an opening of the environment, which opens to atmospheric pressure, and varying the rate of gas flow through the opening to maintain the gas pressure in the environment at the substantially constant level.

In a further embodiment, the gas flow control system may control the flow of the gas to maintain a gas pressure in the environment at a substantially constant level below atmospheric pressure. This may be achieved by mounting the flow control member in an opening of the environment, which is connected to an extractor, and varying the rate of gas flow through the opening to maintain the gas pressure in the environment at the substantially constant level.

The flow control member may adopt any of a plurality of positions, ranging from and including a closed position in which the flow control member substantially closes the opening, to an open position.

The controller may receive a plurality of indications of the gas pressure in the environment, and may act upon each indication to control the flow of the gas through the opening. The controller may establish a pressure-time relationship. The controller may act upon one or more characteristics of the pressure-time relationship, for example the rate of change of pressure with time.

The gas pressure indicator may comprise one or more gas pressure sensors, which may be positioned inside and/or outside the environment. The or each sensor positioned outside the environment may be pressure-linked to the environment via the opening. The gas pressure indicator may comprise at least one gas pressure sensor positioned inside the environment, i.e. on a first side of the opening, and at least one gas pressure sensor positioned outside the environment, i.e. on a second, opposite, side of the opening. The gas pressure indicator may use one or more measurements from each sensor to determine the pressure differential across the opening of the environment. Alternatively, a single gas pressure sensor may be utilised, such as a diaphragm, opposite sides of which being subjected to the pressure from each of the two sides of the opening, to determine the pressure differential across the opening of the environment.

The controller may receive and act upon one or more indications of the pressure differential across the opening to control the flow of the gas through the opening. The controller may establish a pressure differential-time relationship. The controller may establish a pressure differential-gas flow rate relationship. The controller may establish a pressure differential-gas flow rate-flow control member position relationship. Knowing the pressure differential and the position of the flow control member, the controller may calculate the rate of gas flow through the opening. The controller may act upon one or more characteristics of one or more of these relationships.

The pressure differential across the opening may be used to obtain a figure which is functional of the rate of gas flow through the opening. The functionality which establishes the relationship between the gas flow rate and the pressure differential may be calculated or established empirically, as may the position of the flow control member, to obtain a desired rate of gas flow with a specified pressure differential. In this manner, by causing the flow control member to adopt a position dependant upon the pressure differential, a desired rate of gas flow through the opening may be obtained. Specifically, the gas flow control system may respond to a reduction in the pressure differential to cause the flow control member to move in an opening direction to maintain a desired rate of gas flow, or the gas flow control system may respond to an increase in the pressure differential to cause the flow control member to move in a closing direction to maintain the desired rate of gas flow.

The flow control member may, for example, comprise a blade. The flow control member may be mounted in the opening by means of a pivot mechanism. The flow control member may pivot about the pivot mechanism, to take up any of the plurality of positions. The flow control member may be pivotable through more than 48° of rotation, and preferably is pivotable through substantially 90° of rotation, from a closed position at 0° to an open position at 90°. This means that, with the flow control member in the open position, the effective area of the opening, i.e. the area through which the gas flows, is substantially equivalent to the total area of the opening. The gas flow control system may comprise drive means, which may be used to drive the pivot mechanism of the flow control member to move the flow control member to adopt a particular position. Thus the invention allows the flow control member to be quickly and efficiently driven to a desired position. The drive means may comprise a stepper motor.

The controller may comprise or be linked to a data output display and a data input device e.g. a key pad. This enables convenient manual control of the controller, giving an easy way to set one or more operating parameters and choose one or more control characteristics.

The controller may comprise or be linked to an alarm, which may be responsive to the indication of the pressure of the gas in the environment. This allows a user to be warned if necessary, for example if the gas pressure in the environment exceeds or falls below a predefined level for a certain period of time.

The controller may be linked to a computer system. The computer system may provide the data output display, and/or the data input device, and/or the alarm. The controller may provide data to the computer system, and may receive one or more operating signals from the computer system.

The gas flow control system may control the flow of the gas out of and/or into the environment. The gas may be air, and the environment may be a surgically clean environment.

Advantageously, a plurality of the gas flow control systems as described above may be linked to a central controller. This may be a dedicated controller or a general purpose computer. If a plurality of gas flow control systems are being controlled, this provides a convenient way to co-ordinate their control and operation.

A preferred embodiment of the invention, selected by way of example, will now be described, with reference to the following drawing in which:

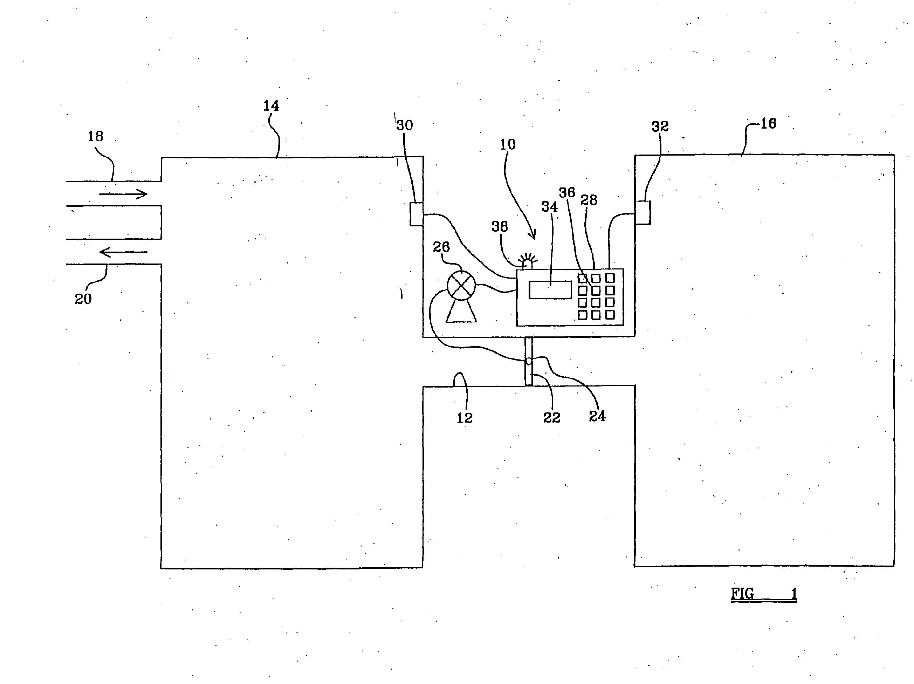

FIGURE 1 is a schematic representation of a gas flow control system according to the invention.

Figure 1 shows a gas flow control system 10 positioned for use between a first room 14, which has a surgically clean environment, and a second room 16, which is open to atmospheric pressure. The environmental air pressure of the first room 14 is to be maintained at a substantially constant level above atmospheric pressure, through control of the flow of air through an air inlet 18 and an air outlet 20 in the room 14, and a duct 12 between the rooms. The duct 12 defines an air outlet opening of the room 14.

The gas flow control system 10 comprises a flow control member 22, drive means 26, a gas pressure indicator comprising air pressure sensors 30, 32 mounted respectively in the first room 14 and the second room 16, and a controller 28. The flow control member 22 is in the form of a blade, and is pivotally mounted in the duct 12 on a pivot mechanism 24. The drive means comprises a stepper motor 26, and is connected to the pivot mechanism 24 to drive the mechanism and thus rotate the flow control member 22. The controller 28 receives data from the gas pressure indicator, and is connected to the stepper motor 26 and is able to start and stop it. The controller 28 has a display 34 for data output, a keypad 36 for data input and an audio and visual alarm 38.

The environmental air pressure of the room 14 is maintained at a substantially constant level above atmospheric pressure as follows. The gas pressure indicator uses measurements from each air pressure sensor 30, 32 to determine the pressure differential across the opening defined by the duct 12. Indications of the pressure differential are received by the controller 28, which, if necessary, activates the stepper motor 26 to open and/or close the flow control member 22 in order to maintain the environmental air pressure in the first room 14 at the required level above atmospheric pressure. For example, if the pressure differential across the opening in the duct drops due to a drop in the environmental air pressure in the first room 14 to below the required level above atmospheric pressure, the controller 28 activates the stepper motor 26 to move the flow control member 22 to adopt a more closed position, decreasing the flow of air from the room 14 via the duct 12, and increasing the environmental air pressure in the room 14.

The controller 28 may work simply by using indications of the pressure differential across the opening, or by using more complex criteria, e.g. a pressure differential-time relationship.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A gas flow control system (10) for controlling the flow of a gas through an opening of an environment (14), comprising
a flow control member (22) adapted to be mounted in the opening and moveable to adopt any of a plurality of positions,
a gas pressure indicator (30, 32) which produces at least one indication of the pressure of the gas in the environment (14), and
a controller (28) which receives and acts upon the indication of the gas pressure to control the position adopted by the flow control member (22) to control the flow of the gas through the opening.

2. A gas flow control system (10) according to claim 1, **characterised in that** it controls the flow of the gas to provide a desired rate of gas flow through the opening.

3. A gas flow control system (10) according to claim 2, **characterised in that** it provides a substantially constant rate of gas flow through the opening.

4. A gas flow control system (10) according to claim 2, **characterised in that** it provides a variable rate of gas flow through the opening.

5. A gas flow control system (10) according to claim 2, **characterised in that** it controls the flow of the gas to maintain a substantially constant gas pressure in the environment (14), by providing a variable rate of gas flow through one or more outlet openings and/or one or more inlet openings of the environment.

6. A gas flow control system (10) according to claim 5, **characterised in that** it controls the flow of the gas to maintain a gas pressure in the environment (14) at a substantially constant level above atmospheric pressure, by mounting the flow control member (22) in an opening of the environment (14), which opens to atmospheric pressure, and varying the rate of gas flow through the opening to maintain the gas pressure in the environment (14) at the substantially constant level.

7. A gas flow control system (10) according to any preceding claim, **characterised in that** the controller (28) receives a plurality of indications of the gas pressure in the environment (14), and acts upon each indication to control the flow of the gas through the opening.

8. A gas flow control system (10) according to claim 7, **characterised in that** the controller (28) establishes a pressure-time relationship, and acts upon one or more characteristics of the pressure-time relationship.

9. A gas flow control system (10) according to any preceding claim, **characterised in that** the gas pressure indicator comprises one or more gas pressure sensors (30, 32), positioned inside and/or outside the environment (14).

10. A gas flow control system (10) according to claim 9, **characterised in that** the gas pressure indicator comprises at least one gas pressure sensor (30) positioned inside the environment (14), i.e. on a first side of the opening, and at least one gas pressure sensor (32) positioned outside the environment (14), i.e. on a second, opposite, side of the opening.

11. A gas flow control system (10) according to claim 10, **characterised in that** the gas pressure indicator uses one or more measurements from each sensor (30, 32) to determine the pressure differential across the opening of the environment (14).

12. A gas flow control system (10) according to claim 11, **characterised in that** the controller (28) receives and acts upon one or more indications of the pressure differential across the opening to control the flow of the gas through the opening.

13. A gas flow control system (10) according to any preceding claim, **characterised in that** the flow control member comprises a blade (22).

14. A gas flow control system (10) according to any preceding claim, **characterised in that** the flow control member (22) is mounted in the opening by means of a pivot mechanism (24), and pivots about the pivot mechanism (24) to take up any of the plurality of positions.

15. A gas flow control system (10) according to claim 14, **characterised in that** the flow control member is pivotable through more than 48° of rotation.

16. A gas flow control system (10) according to claim 15, **characterised in that** the flow control member (22) is pivotable through substantially 90° of rotation, from a closed position at 0° to an open position at 90°.

17. A gas flow control system (10) according to any of claims 14 to 16, **characterised in that** it comprises drive means (26), used to drive the pivot mechanism (24) of the flow control member (22) to move the flow control member (22) to adopt a particular position.

18. A gas flow control system (10) according to any preceding claim, **characterised in that** the controller (28) is linked to a data output display (34) and a data input device (36).

19. A gas flow control system (10) according to any preceding claim, **characterised in that** the controller (28) is linked to an alarm (38), responsive to the indication of the gas pressure in the environment.

20. A plurality of gas flow control systems (10) according to any preceding claim, linked to a central controller.
